# EUROPÄISCHE PATENTSCHRIFT

(11) **EP 2 891 289 B1**
(45) Veröffentlichungstag und Bekanntmachung des Hinweises auf die Patenterteilung: **18.05.2016**
(21) Anmeldenummer: 12753715.7
(22) Anmeldetag: 29.08.2012
(51) Int. Cl.: H04L 29/06, H04L 29/08, H04N 21/214, B64D 11/00

(54) **VERFAHREN UND SYSTEM ZUR ZUORDNUNG VON INFORMATIONSINHALTEN**
METHOD AND SYSTEM FOR ASSIGNING INFORMATION CONTENTS
PROCÉDÉ ET SYSTÈME D'ATTRIBUTION DE CONTENUS D'INFORMATIONS

(43) Veröffentlichungstag der Anmeldung: 08.07.2015
(73) Patentinhaber: Siemens Convergence Creators GmbH, 1210 Wien (AT)
(72) Erfinder: SCHREIBER, Gerald, 21465 Wentorf (DE)
(74) Vertreter: Maier, Daniel Oliver
(86) Internationale Anmeldenummer: PCT/EP2012/066756
(87) Internationale Veröffentlichungsnummer: WO 2014/032707

(56) Entgegenhaltungen:
- WO-A1-02/067548
- WO-A1-2010/058317
- US-A1- 2005 216 938

## Beschreibung

### Technisches Gebiet

Die vorliegende Erfindung betrifft ein Verfahren zur Zuordnung von Informationsinhalten in einem Beförderungsmittel, insbesondere einem Flugzeug. Die Informationsinhalte werden im Beförderungsmittel beispielsweise während einer Reise auf einer üblicherweise mobilen nutzerspezifischen Ausgabeeinheit, wie z.B. Smartphone, Laptops, Tablet-PCs, etc. angezeigt und von einem Nutzer der Ausgabeeinheit konsumiert. Weiterhin betrifft die gegenständliche Erfindung auch ein System zur Durchführung des Verfahrens zur Zuordnung von Informationsinhalten.

### Stand der Technik

In Beförderungsmittel für Personen, wie z.B. Flugzeugen, Zügen, Bussen oder auch Schiffen, sind heutzutage oft Informationssysteme angebracht. Von diesen Informationssystem, welche auch als so genannte Infotainmentsysteme bezeichnet werden, können beispielsweise Daten für Informationszwecke und/oder zur Unterhaltung auf Ausgabeeinheiten übertragen werden. Über derartige Informationssysteme, wie z.B. aus US 2005/0216938 A1 bekannt, werden Passagiere während der Nutzung des jeweiligen Beförderungsmittels (z.B. Flugzeug, Schiff, Zug, etc.) beispielsweise mit Informationsangeboten und/oder Unterhaltungsprogrammen versorgt. Die Ausgabeeinheiten zum Anzeigen und Konsumieren der Informationsinhalte können dabei fix im Beförderungsmittel angebracht sein wie z.B. Ausgabebildschirme oder mobile nutzerspezifische Ausgabeeinheiten (z.B. Laptop, Tablet-PC, Smartphone, etc.) sein, welche einem Passagier entweder zur Verfügung gestellt werden oder von diesem ins Beförderungsmittel mitgenommen werden.

Die Informationssysteme - insbesondere in Flugzeugen - haben sich in den letzten 25 Jahren stark weiterentwickelt. Anfangs bestanden diese System nur aus Audiosystemen, über welchen den Passagieren Audioinformationen und/oder Audiodaten (z.B. Musik) angeboten wurde. Ab den 1980iger Jahren wurden die Informationssysteme um Ausstrahlungen von Videoinformationen (z.B. VHS-Videobänder, etc.) erweitert, wobei die Informationsinhalte z.B. über Gruppenbildschirme in der Flugzeugkabine, etc. zu sehen waren. Seit den frühen 1990iger Jahren wurden die Informationssystem zu so genannten In-Seat-Video-Systemen erweitert, bei welchem von einem Passagier z.B. Videofilme, Musik oder andere Informationen üblicherweise auf einem zum Sitzplatz gehörenden Bildschirm oder Ausgabegeräte mittels einer Bedieneinrichtung ausgewählt werden konnten und dann auf dem Ausgabegerät angezeigt wurden. Mittlerweile gibt es Ansätze, Passagieren insbesondere in Flugzeugen so genanntes Infotainment - d.h. Informationsinhalte wie z.B. Realtime-Fluginformationen, Videodaten (z.B. Nachrichten, Filme, etc.), Audiodaten, etc. für Informations- und Unterhaltungszwecke - auf mobilen, nutzerspezifischen Ausgabeeinheiten (z.B. Tablet-PC, Smartphone, Laptop, etc.) zur Verfügung zu stellen. Die Ausgabeeinheiten können dabei beispielsweise vom Betreiber des Beförderungsmittels zur Verfügung gestellt werden oder es werden mobile Geräte des Passagiers als Ausgabeeinheit genutzt. Neben Flugzeugen gibt es auch für andere Beförderungsmittel wie z.B. Schiffe, Züge, Busse, etc. ähnliche Überlegungen den Passagieren bzw. Fahrgästen Unterhaltungs- und/oder Informationsinhalte anzubieten.

In Flugzeugen umfassen Informationssysteme üblicherweise eine zentrale Servereinheit, von welcher beispielsweise mit den Ausgabeeinheiten kommuniziert wird, Eingaben von Passagieren verarbeitet werden, und von welcher für eine Verteilung der Informationsinhalte gesorgt wird. Zusätzlich ist üblicherweise eine zum Informationssystem gehörende Datenbank vorgesehen, in welcher z.B. Informationsinhalte (z.B. Video- und/oder Audiodaten, etc.) abgelegt sind, und gegebenenfalls andere Daten (z.B. Daten von Ausgabeeinheiten, etc.) gespeichert werden können. Die ausgewählten Informationsinhalte können dabei beispielsweise mittels so genanntem Streaming auf die nutzerspezifischen Ausgabeeinheiten wie z.B. von Passagieren mitgebrachte mobile Endgeräte (Tablet-PC, Smartphone, etc.) übertragen werden. Dazu ist allerdings neben einem Zugangspunkt, über welchen eine Ausgabeeinheit eine drahtlose Verbindung zum Informationssystem des Beförderungsmittels aufbauen kann, auch ein so genannter Streaming-Server für eine Übertragung und Ausgabe der Informationsinhalte (z.B. Audio- und/oder Videodaten) notwendig. Auf diesen Streaming-, Server müssen außerdem vor einem jeweiligen Betrieb des Beförderungsmittels neue aktuelle Informationsinhalte geladen werden. Dies erfordert vor allem eine hohen logistischen Aufwand und eine meist teure und leistungsfähige Infrastruktur innerhalb des jeweiligen Beförderungsmittels (z.B. Flugzeug). Weiterhin ist für eine laufende Aktualisierung der Informationsinhalte eine umfangreiche Datenmenge nötig, welche dabei auf den Streaming-Server transferiert werden muss.

Um Passagiere mit aktuellen Informationsinhalten zu versorgen, besteht aber z.B. auch die Möglichkeit, dass ein Betreiber eines Beförderungsmittels (z.B. Fluglinie, Bahnbetreiber, etc.) den Passagieren leihweise unentgeltlich oder gegen eine Gebühr Ausgabeeinheiten wie z.B. Tablet-PCs zur Verfügung stellt. Auf diesen Ausgabeeinheiten können dann beispielsweise aktuelle Informationsinhalte (z.B. Videodaten, Filme, E-Books, etc.) geladen sein. Von einem Passagier kann dann bei einer Nutzung der Ausgabeeinheit während einer Benutzung eines Beförderungsmittels, aus den vorab auf die Ausgabeeinhalte geladenen aktuellen Informationsinhalten gewählt werden. Ausgewählte Informationsinhalte können dann auf der Ausgabeeinheit abgespielt bzw. dem Nutzer angezeigt werden. Ein Einsatz von Ausgabeeinheiten mit vorab auf die Ausgabeeinheit geladenen Informationsinhalten weist aber den Nachteil auf, dass ein großer logistischer Aufwand sowie einen entsprechende Anzahl an Ausgabeeinheiten notwendig sind. Denn es müssen beispielsweise sehr häufig die Informationsinhalte auf die Ausgabeeinheiten geladen und dabei aktualisiert werden. Auch müssen die Akkus der Ausgabegeräte zwischen zwei Ausgaben in der Regel geladen werden. Insbesondere für eine Aktualisierung der Informationsinhalte sind auch umfangreiche Datenmengen notwendig, die auf einer entsprechenden Infrastruktur für das Laden der Ausgabeeinheiten verfügbar sein müssen.

Eine weitere Möglichkeit für eine Nutzung von Informationsinhalten innerhalb eines Beförderungsmittels bzw. bei einer Reise mit diesem besteht beispielsweise darin, dass von einem Nutzer bzw. Passagier Informationsinhalte (z.B. Videodaten, E-Books, etc.) z.B. gekauft werden. Diese Informationsinhalte können dann vor einer Reise auf ein dem Passagier gehörendes Ausgabegerät (z.B. Tablet-PC, Laptop, etc.) geladen werden. Das Ausgabegerät kann der Passagier dann in das Beförderungsmittel mitnehmen und dort den vorab gekauften und geladenen Informationsinhalt konsumieren. Dies hat allerdings den Nachteil, von hohen Kosten für den Erwerb einer zeitlich unbefristeten persönlichen Kopie der Informationsinhalte. Diese Kosten fallen für den Passagier vor Nutzung des Beförderungsmittels an und damit zu einem Zeitpunkt an dem die Bereitschaft zu solchen Ausgaben deutlich geringer ausfällt als während der Nutzung des Beförderungsmittels. Ein weiterer Nachteil ist mangelnde Verfügbarkeit von neuen, aktuellen Informationsinhalten, wenn die gekauften bzw. geladenen Inhalte genutzt worden sind.

### Darstellung der Erfindung

Der Erfindung liegt daher die Aufgabe zugrunde, ein Verfahren sowie ein System anzugeben, durch welche ohne großen Aufwand sowie ohne aufwendiger Logistik und/oder Infrastruktur und mit einer hohen Sicherheit ein Zugang zu aktuellen Informationsinhalten in einem Beförderungsmittel, insbesondere einem Flugzeug, ermöglicht wird.

Diese Aufgabe wird durch ein Verfahren sowie ein System der eingangs genannten Art mit den Merkmalen gemäß den unabhängigen Patentansprüchen gelöst. Vorteilhafte Ausführungsformen der vorliegenden Erfindung sind in den abhängigen Ansprüchen beschrieben.

Erfindungsgemäß erfolgt die Lösung der Aufgabe mit einem Verfahren der eingangs erwähnten Art, bei welchem jedem Beförderungsmittel - z.B. jedem Flugzeug, Schiff, etc. eines Betreibers - über ein erstes Schlüsselpaar, welches aus einem ersten geheimen Schlüssel und einem ersten öffentlichen Schlüssel besteht, ein On-Board-Server zugeordnet wird. Der erste geheime Schlüssel wird dabei am On-Board-Server gespeichert. Dann wird vor der Nutzung des Beförderungsmittels eine Anwendung auf einer mobilen, nutzerspezifischen Ausgabeeinheit installiert und von der Anwendung ein zweites Schlüsselpaar bestehend aus einem zweiten geheimen und einem zweiten öffentlichen Schlüssel angefordert. Der zweite geheime Schlüssel wird dann an die Anwendung auf der Ausgabeeinheit übertragen und damit z.B. die Ausgabeeinheit bzw. ein Passagier eindeutig identifiziert. Dann werden von der Anwendung verfügbare Informationsinhalte angezeigt. Es wird für jeden ausgewählten Informationsinhalt eine eindeutige Kennung erstellt, mittels welcher die ausgewählten Informationsinhalte von der Anwendung auf der Ausgabeeinheit angefordert werden. Dabei wird der eindeutigen Kennung ein drittes Schlüsselpaar mit einem dritten geheimen und einem dritten öffentlichen Schlüssel zugeordnet. Dann wird der dritte geheime Schlüssel zunächst mit dem zweiten öffentlichen Schlüssel, welcher der Ausgabeeinheit bzw. dem Passagier zugeordnet ist, and nachfolgend mit dem ersten öffentlichen Schlüssel, durch welchen der entsprechende On-Board-Server bekannt ist, verschlüsselt und dem entsprechenden On-Board-Server des Beförderungsmittels zugeordnet bzw. auf diesem hinterlegt. Dann werden die ausgewählten Informationsinhalte mit dem dritten öffentlichen Schlüssel verschlüsselt an die Ausgabeeinheit übertragen und dort abgelegt.

Der Hauptaspekt der erfindungsgemäß vorgeschlagenen Lösung besteht darin, dass die verschlüsselten Informationsinhalte zeitlich getrennt von dem zur Entschlüsselung notwendigen geheimen (dritten) Schlüssel übertragen werden. Eine Verschlüsselung und Übertragung der Informationsinhalte auf die nutzerspezifische Ausgabeeinheit erfolgt vor einer Benutzung des Beförderungsmittels. Dadurch können starke und teilweise auch rechenzeitintensive Verschlüsselungsalgorithmen für einen Schutz der Informationsinhalte genutzt werden. Weiterhin erfolgt die Verschlüsselung der Informationsinhalte basierend auf der eindeutigen Kennung, welche einem ausgewählten Informationsinhalte zugewiesen wird, individuell pro Nutzer, wobei eine Identität des Nutzers z.B. aufgrund einer Buchung - insbesondere über das eingesetzte zweite Schlüsselpaar bekannt ist. Dadurch kann ein Diebstahl von aktuellen, insbesondere rechtlich geschützten Informationsinhalten (z.B. Filmen, E-Books, etc.) sehr einfach nachgewiesen werden. Damit und aufgrund eines Einsatzes von sicheren Verschlüsselungsalgorithmen weist das erfindungsgemäße Verfahren eine hohe Sicherheit auf.

Der geheime Schlüssel zum Entschlüsseln der Informationsinhalte wird auf dem On-Board-Server zweifach verschlüsselt hinterlegt. Da der On-Board-Server lediglich Schlüssel bereitstellt, ist keine besondere Rechnerleistung für den On-Board-Server notwendig und es müssen vor einer Nutzung des On-Board-Servers während eines Betriebs des Beförderungsmittels nur die entsprechend benötigten Schlüssel nachgeladen werden - d.h. die Schlüssel, welche für ein Entschlüsseln von Informationsinhalten notwendig sind, die von Passagieren ausgewählt wurden. Damit bleibt sowohl der Infrastrukturaufwand bzw. der Hardwareaufwand für den On-Board-Server als auch ein logistischer Aufwand sehr gering. So kann beispielsweise für das Nachladen der Schlüssel aufgrund einer dafür benötigten Bandbreite und Datenmenge eine Mobilfunkverbindung genutzt werden. Eine Übertragung der umfangreichen Informationsinhalte wird bereits vor der Benutzung des Beförderungsmittels z.B. vom Passagier auf die Ausgabeeinheit durchgeführt, wobei Kommunikationsnetze mit geringen Kosten und entsprechender Übertragungsrate genutzt werden können (z.B. Internet, etc.). Damit können Passagieren wesentlich aktuellere und umfangreichere Angebote von Informationsinhalten zur Verfügung gestellt werden, als bei einem Einsatz von z.B. einem Streaming-Server an Bord des Beförderungsmittels.

Bei einer Nutzung des Beförderungsmittels wird dann idealer Weise von der nutzerspezifischen Ausgabeeinheit eine Verbindung zum On-Board-Server hergestellt. Vor dem Abspielen des ausgewählten Informationsinhalts wird der dritte geheime Schlüssel, welcher am On-Board-Server hinterlegt ist, mit dem am On-Board-Server befindlichen ersten geheimen Schlüssel entschlüsselt. Dann wird der noch mit dem zweiten öffentlichen Schlüssel verschlüsselte dritte geheime Schlüssel vom On-Board-Server an die Anwendung auf der Ausgabeeinheit übertragen und dort mit dem zweiten geheimen Schlüssel entschlüsselt. Dann kann der ausgewählte, auf der Ausgabeeinheit befindliche Informationsinhalt mit dem dritten geheimen Schlüssel entschlüsselt und angezeigt werden. Durch eine Übertragung des zum Entschlüsseln der ausgewählten Informationsinhalte notwendigen dritten geheimen Schlüssels erst während der Nutzung des Beförderungsmittels wird eine widerrechtliche Nutzung der Informationsinhalte sehr einfach verhindert. Durch das erste und zweite Schlüsselpaar wird sichergestellt, dass der dritte geheime Schlüssel, welcher über das dritte Schlüsselpaar der eindeutigen Kennung des ausgewählten Informationsinhalts zugeordnet ist, am entsprechenden On-Board-Server jenes Beförderungsmittels verfügbar ist, in welchem sich auch der über das zweite Schlüsselpaar identifizierbar Passagier bzw. die zugehörige Ausgabeeinheit mit den verschlüsselten Informationsinhalten befindet. Die Informationsinhalte können dann während der Nutzung des Beförderungsmittels konsumiert werden und es wird auf einfache Weise und ohne großen Aufwand eine widerrechtliche Nutzung bzw. ein Diebstahl der Informationsinhalte verhindert.

Es ist vorteilhaft, wenn eine Zuordnung zwischen dem On-Board-Server, der nutzerspezifischen Ausgabeeinheit, ausgewählten Informationsinhalten und/oder dem ersten, zweiten und drittem Schlüsselpaar in einer Inventardatenbank gespeichert wird. Über eine Speicherung dieser Zuordnung in der Inventardatenbank kann ein Betreiber des Beförderungsmittels auf einfache Weise nachvollziehen, in welchem Beförderungsmittel und von welchem Passagier Informationsinhalte genutzt worden sind oder werden. Damit kann sehr einfach und ohne großen Aufwand ein Diebstahl oder ein widerrechtliche Nutzung (z.B. widerrechtliches Kopieren, etc.) nachvollzogen werden.
Weiterhin ist es günstig, wenn nach Installation der Anwendung und einem Übertragen des zweiten geheimen Schlüssels an die Anwendung ein Datensatz mit Informationen über eine Nutzung des Beförderungsmittels z.B. an die Ausgabeeinheit oder einen Passagier übermittelt wird. Dabei kann vom Betreiber des Beförderungsmittels (z.B. Airline-Betreiber) einem Passagier im Datensatz eine Beschreibung über seine Reise mit dem Beförderungsmittel bzw. eine eindeutige Beschreibung dazu übermittelt werden. Dieser Datensatz kann beispielsweise mittels einer Mail, welche gegebenenfalls verschlüsselt und/oder signiert ist, einer SMS z.B. an eine dem Betreiber bekannte bzw. bei einer Buchung hinterlegte Rufnummer oder z.B. bei einem Flug über einen so genannten Boarding-Pass übermittelt werden. Eine Entgegennahme des Datensatzes kann z.B. automatisch durch die Anwendung auf der nutzerspezifischen Ausgabeeinheit erfolgen oder von der Anwendung kann nach ihrer Installation oder ihrem Start über diesen Datensatz sehr einfach aktiv geprüft werden, ob der Nutzer der Ausgabeeinheit als Passagier für eine bestimmte Nutzung eines Beförderungsmittels (z.B. Flug, Bahnfahrt, etc.) gebucht ist.

Eine bevorzugte Weiterentwicklung des erfindungsgemäßen Verfahrens sieht vor, dass die Schlüsselpaare von einem Schlüsselserver erzeugt werden. Weiterhin ist es vorteilhaft, wenn die öffentlichen Schlüssel, insbesondere der erste und der zweite öffentliche Schlüssel des ersten und zweiten Schlüsselpaares in einer Schlüsseldatenbank hinterlegt werden. Damit kann in einfacher Weise ein Erstellen der Schlüsselpaare sowie der Schlüssel zentral erfolgen. Auch die Speicherung für die öffentlichen Schlüssel, insbesondere jene öffentlichen Schlüssel, welche zum Verschlüsseln des dritten geheimen Schlüssels eingesetzt werden, können zentral zwischen- bzw. abgespeichert werden. Dadurch werden ein Infrastruktur- sowie ein Logistikaufwand sehr einfach reduziert.

Eine zweckmäßige Ausgestaltung des erfindungsgemäßen Verfahrens sieht vor, dass nach einem Verlassen des Beförderungsmittels die geheimen Schlüssel sowie alle ausgewählten Informationsinhalte von der Ausgabeeinheit gelöscht werden. Durch ein Löschen der ausgewählten Informationsinhalte wird auf einfache Weise eine widerrechtliche Nutzung verhindert und die Sicherheit bzw. der Schutz für die Informationsinhalte erhöht. Durch ein Löschen der geheimen Schlüssel durch den On-Board-Server bzw. den Schlüsselserver wird nach Beendigung der Nutzung des Beförderungsmittels zusätzlich eine Nutzung und/oder ein Zugriff auf die verschlüsselten Informationsinhalte nach Verlassen des Beförderungsmittels oder nach Beendigung einer Reise verhindert. Alternativ können beispielsweise die geheimen Schlüssel vom Schlüsselserver bereits nach einer bestätigten Übertragung - beim ersten geheimen und beim dritten geheimen Schlüssel an den On-Board-Server und beim zweiten geheimen Schlüssel an die Anwendung auf der nutzerspezifischen Ausgabeeinheit - gelöscht werden. Gegebenfalls kann ein Löschen der ausgewählten Informationsinhalte und der geheimen Schlüssel zeitverzögert erfolgen, um eventuell auftretende Verspätungen oder Verzögerungen bei der Nutzungsdauer des Beförderungsmittels zu berücksichtigen.

Es ist vorteilhaft, wenn die eindeutige Kennung für jeden ausgewählten Informationsinhalt von einem Katalogserver vergeben wird. Durch den Katalogserver können die verfügbaren Informationsinhalte auf einfache Weise zentral verwaltet werden und der Anwendung auf der nutzerspezifischen Ausgabeeinheit angezeigt werden. Durch eine zentrale Vergabe der Kennungen für einen ausgewählten Informationsinhalt kann dieser dann eindeutig einer bestimmten Nutzung eines Beförderungsmittels (z.B. Flug, Bahnfahrt, etc.) sowie einem Passagier zugeordnet werden.

Bei einer bevorzugten Fortbildung des erfindungsgemäßen Verfahrens wird das dritte Schlüsselpaar zum Zeitpunkt einer Auswahl von einem Informationsinhalt generiert. Damit werden Schlüsselpaare zur Verschlüsselung von Informationsinhalten nur bei Bedarf erzeugt und die Anzahl dieser Schlüsselpaare gering gehalten. Das Schlüsselpaar kann dann sehr einfach und eindeutig dem ausgewählten Informationsinhalt bzw. der zugehörigen eindeutigen Kennung zugeordnet werden.

Alternativ kann es aber auch von Vorteil sein, wenn eine Anzahl von dritten Schlüsselpaaren vorab zur Bildung einer Vorratsmenge erzeugt und dann an den On-Board-Server übertragen werden. Dabei wird zum Zeitpunkt der Auswahl eines Informationsinhalts ein drittes Schlüsselpaar der Vorratmenge entnommen und diesem dritten Schlüsselpaar dann die eindeutige Kennung des ausgewählten Informationsinhalts zugeordnet. Diese Vorgehensweise weist den Vorteil auf, dass Informationsinhalte noch sehr kurzfristig vor einer Nutzung eines Beförderungsmittels beispielsweise nach einer Übertragung der Schlüssel an den On-Board-Server ausgewählt werden können. Eine Übertragung des dritten geheimen Schlüssels (zur Entschlüsselung des ausgewählten Informationsinhalts) erfolgt dabei vorab einfach verschlüsselt mit dem ersten öffentlichen Schlüssel, welcher dem On-Board-Server zugeordnet ist. Die Weiterleitung des dritten geheimen Schlüssels an die Ausgabeeinheit wird dann vom On-Board-Server während der Nutzung des Beförderungsmittels beispielsweise über ein gesichertes Verfahren z.B. mittels des zweiten öffentlichen Schlüssel oder mittels Secure Socket Layer (SSL) durchgeführt.

Idealer Weise werden ausgewählte Informationsinhalte bei einer Verschlüsselung markiert. Eine derartige Markierung kann beispielsweise offen sichtbar z.B. durch so genanntes Watermarking oder ein Wasserzeichen, hörbar oder verdeckt durch so genanntes Forensic Watermarking oder digitales Wasserzeichen im Bild-, Video- und/oder Tonsignal erfolgen. Ein digitales Wasserzeichen ist eine technische Markierung in Trägermedien wie z.B. Bild-, Video- oder Audiodaten oder Texten, die werkbezogen und meist nicht wahrnehmbar ist. Ein digitales Wasserzeichen wird daher beispielsweise dazu eingesetzt, um Rechteinhaberinformationen zur Urheberrechtsverletzungsverfolgung in einem Werk einzubetten. Mit digitalen Wasserzeichen kann daher beispielsweise sehr einfach die Authentizität einer Datei nachgewiesen und ihre Zurückverfolgbarkeit sichergestellt werden.

Weiterhin erfolgt die Lösung der Aufgabe durch ein System der eingangs erwähnten Art, bei welchem ein On-Board-Server für einen Aufbau einer Verbindung mit einer nutzerspezifischen Ausgabeeinheit wie z.B. einem Tablet-PC, Smartphone, Laptop, etc. innerhalb eines Beförderungsmittel, eine Anwendung, welche auf der Ausgabeeinheit installierbar ist, ein Schlüsselserver und eine Schlüsseldatenbank zum Erzeugen und Speichern von Schlüsselpaaren - bestehend aus einem geheimen und einem öffentlichen Schlüssel - sowie der Schlüssel und ein Katalogserver zum Anfordern eines Angebots an verfügbaren Informationsinhalten und zum Vergeben von eindeutigen Kennungen für ausgewählte Informationsinhalte vorgesehen sind. Weiterhin umfasst das erfindungsgemäße System einen Verschlüsselungsserver zum Verschlüsseln von gewählten Informationsinhalten, eine Inventardatenbank zum Ablegen von Zuordnungen zwischen dem On-Board-Server, nutzerspezifischer Ausgabeeinheit, ausgewählten Informationsinhalten und/oder jeweils zugehörigen Schlüsselpaaren sowie eine Informationsdatenbank zum Ablegen verfügbarer und auswählbarer Informationsinhalte. Weiterhin ist zumindest ein Kommunikationsnetz für jeweils eine Kommunikation innerhalb und eine Kommunikation außerhalb des Beförderungsmittels vorgesehen.

Der Hauptaspekt des erfindungsgemäßen Systems besteht darin, dass eine Trennung zwischen einer Übermittlung der ausgewählten, verschlüsselten Informationsinhalte und einer Übermittlung der entsprechenden Schlüssel zum Entschlüsseln erfolgt. Durch einen Aufbau des Systems in einen On-Board-Server, auf welchen nur die entsprechenden Schlüssel - ein erster geheimer Schlüssel, welcher den On-Board-Server identifiziert, und ein dritter geheimer Schlüssel zum Entschlüsseln der Informationsinhalte - gespeichert werden, eine Anwendung, welche auf einer nutzerspezifischen Ausgabeeinheit installierbar ist und für eine Kommunikation mit den anderen Systemkomponenten sorgt, und zentralen Server- und Datenbankeinheiten für Schlüsselgenerierung und -speicherung, Verwaltung der Informationsinhalte, etc. wird insbesondere die Infrastruktur bzw. Hardware für eine Nutzung von Informationsinhalten während der Nutzung eines Beförderungsmittels einfach und kostengünstig gehalten. Weiterhin können durch das erfindungsgemäße System ausgewählte Informationsinhalte sicher verschlüsselt und eindeutig einer bestimmten Nutzung eines Beförderungsmittels (z.B. Flug, etc.) und einem bestimmten Passagier zugeordnet werden, wodurch Diebstahl und/oder missbräuchliche Nutzung der Informationsinhalte erschwert bzw. verhindert wird. Außerdem besteht bei einem System außerhalb des Beförderungsmittels die Möglichkeit ein wesentlich größeres Angebot an Informationsinhalten zur Verfügung zu stellen als bei einem Streaming-Server bzw. -System innerhalb des Beförderungsmittels, da außerhalb es Beförderungsmittels ein System mit wesentlich größerer Speicherkapazität eingesetzt werden kann.

Es ist dabei vorteilhaft, wenn der Schlüsselserver, der Katalogserver und der Verschlüsselungsserver auf einem Server und/oder die Schlüsseldatenbank, die Inventardatenbank und die Informationsdatenbank, in welcher die verfügbaren und auswählbaren Informationsinhalte abgelegt sind, in einer Datenbank zusammengefasst sind. Auf diese Weise können sehr einfach Kosten für Infrastruktur bzw. Hardware reduziert werden.

Idealer Weise ist der On-Board-Server als mobile Einheit ausgeführt. Dabei ist es denkbar, dass der On-Board-Server als mobiles, akkubetriebenes Gerät ausgeführt ist, welche erst während eines Einsatzes in einem Beförderungsmittel - d.h. während eines Flugs oder einer Bahnfahrt, etc. - aktiviert wird. Dabei ist vorteilhafter Weise beim Einsatz in Flugzeugen keine luftfahrttechnische Zulassung bzw. bei einem Einsatz in einem Zug keine bahntechnische Zulassung notwendig, da der On-Board-Server nicht mit dem Beförderungsmittel verbunden ist. Außerdem kann beispielsweise der On-Board-Server - entsprechend der Zuordnung durch das erste Schlüsselpaar - flexibel in unterschiedlichen Beförderungsmitteln des Betreibers eingesetzt werden.

Es ist aber auch möglich, dass der On-Board-Server als Software-Modul ausgeführt ist. Damit kann der On-Board-Server sehr leicht bei bereits bestehenden Installationen, welche nur sehr wenig Speicher und/oder Verarbeitungsressourcen (z.B. Recheneinheit, etc.) aufweisen, wie z.B. so genannten Connectivity-Systemen, lokalen Webservern, etc. eingesetzt werden.

Alternativ besteht auch die Möglichkeit, dass der On-Board-Server nicht an Bord des Beförderungsmittels angebracht ist, sondern außerhalb bei den restlichen Server- und Datenbankkomponenten des Systems installiert wird. Eine Kommunikation mit der Ausgabeeinheit während der Nutzung des Beförderungsmittels (z.B. Flug, Bahnfahrt, etc.) kann dann z.B. über das so genannte Connectivity System erfolgen oder es wird beispielsweise der dritte geheime Schlüssel zur Entschlüsselung der gewählten Informationsinhalte unmittelbar vor Nutzung des Beförderungsmittels - z.B. unmittelbar vor Abflug beispielsweise bei CheckIn oder beim Boarding - übermittelt. Dabei kann gegebenenfalls eine Positionsbestimmung der Ausgabeeinheit durchgeführt werden, um festzustellen, ob sich diese in Nähe des Beförderungsmittels (z.B. Gate bei einem Flugzeug, etc.) befindet. Dadurch wird die Infrastruktur im Beförderungsmittel klein gehalten und zusätzlich sichergestellt, dass der Informationsinhalt nicht durch Unberechtigte genutzt wird.

### Kurzbeschreibung der Zeichnung

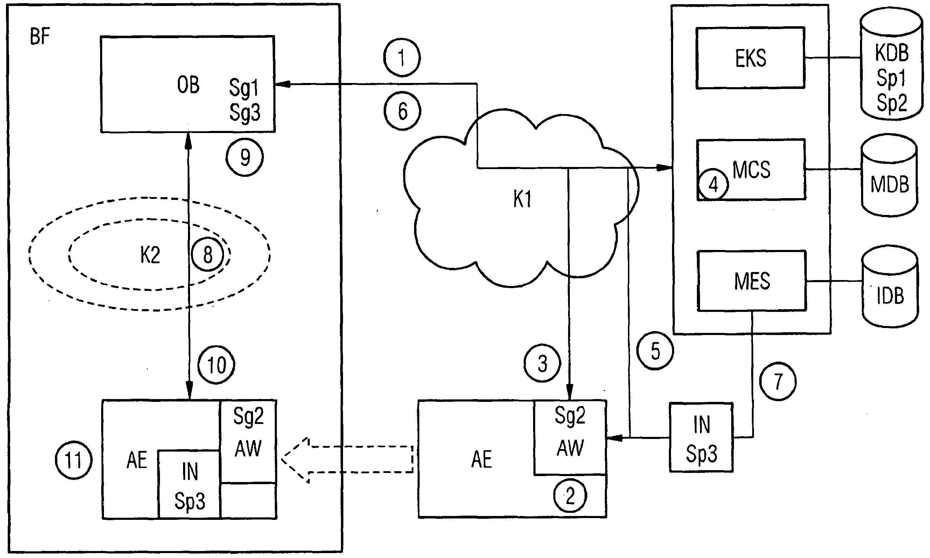

Die Erfindung wird nachfolgend in beispielhafter Weise anhand der beigefügten Figur erläutert. Es zeigt Figur 1 beispielhaft und schematisch das erfindungsgemäße System sowie den Ablauf des erfindungsgemäßen Verfahrens zur Zuordnung von Informationsinhalten.

### Ausführung der Erfindung

Figur 1 zeigt in schematischer und beispielhafter Weise das erfindungsgemäße System zur Zuordnung von Informatiönsinhalten IN, welche bei einer Nutzung eines Beförderungsmittels BF wie z.B. einem Flugzeug, aber auch einem Zug, einem Schiff oder einem Bus, auf einer nutzerspezifischen Ausgabeeinheit AE (z.B. Tablet-PC, Smartphone, Laptop, etc.) angezeigt und konsumiert werden können. Das System umfasst dabei mehrere idealer Weise zentral ausgestaltete Komponenten. Diese Komponenten sind zumindest ein Schlüsselserver EKS, ein Katalogserver MCS und ein Verschlüsselungsserver MES, welche entweder als eigene Server ausgeführt oder auf einem gemeinsamen Server zusammengefasst sein können. Weiterhin sind als Komponenten zumindest eine Schlüsseldatenbank KDB, eine Informationsdatenbank MDB sowie eine Inventardatenbank IDB vorgesehen, welche ebenfalls als eigene Datenbank ausgeführt oder in einer Datenbank zusammengefasst sein können.

Der Schlüsselserver EKS sowie die Schlüsseldatenbank KDB werden zum Erzeugen und Speichern von Schlüsselpaaren (Sg1, Sp1, Sg2, Sp2, Sg3, Sp3), welche jeweils aus einem geheimen Schlüssel (Sg1, Sg2, Sg3) und einem öffentlichen Schlüssel (Sp1, Sp2, Sp3) bestehen, eingesetzt. In der Informationsdatenbank MDB sind aktuelle und für Nutzer des Beförderungsmittel BF verfügbare Informationsinhalte IN abgelegt. Ein Angebot der verfügbaren Informationsinhalte IN kann über den Katalogserver MCS angefordert werden, von welchem auch eindeutige Kennungen für die jeweils dann ausgewählten Informationsinhalte IN vergeben werden. Vom Verschlüsselungsserver MES werden ausgewählte Informationsinhalte verschlüsselt und in der Inventardatenbank IDB werden vom erfindungsgemäßen Verfahren erzeugte Zuordnungen abgespeichert wie z.B. die Zuordnung von eindeutiger Kennung eines ausgewählten Informationsinhalts IN zu einem Beförderungsmittel BF und zu einem Nutzer des Beförderungsmittels BF.

Weiterhin umfasst das erfindungsgemäße System einen On-Board-Server OB, welcher innerhalb des Beförderungsmittels BF angebracht ist und von welchem eine Verbindung zur nutzerspezifischen Ausgabeeinheit AE über ein Kommunikationsnetz K2 aufgebaut wird. Der On-Board-Server kann beispielsweise als mobiles, akkubetriebenes Gerät ausgeführt sein, welches an Bord des Beförderungsmittels BF platziert und während eines Betriebs des Beförderungsmittels BF (z.B. Flug, Bahnfahrt, etc.) aktiviert wird. Alternativ kann der On-Board-Server z.B. auch als Software-Modul ausgestaltet sein, welche beispielsweise auf einer bereits im Beförderungsmittel BF bestehenden Installation bzw. Infrastruktur wie z.B. einem lokalen Webserver oder einem so genannten Connectivity-System installiert wird. Zusätzlich ist es auch möglich, dass der On-Board-Server OB außerhalb des Beförderungsmittels BF - beispielsweise bei den anderen Systemkomponenten - installiert ist und z.B. über ein allgemeines Kommunikationsnetz (z.B. Mobilfunknetz) Daten (wie z.B. einen Schlüssel Sg3, etc.) kurz vor einer Nutzung des Beförderungsmittels BF an die nutzerspezifische Ausgabeeinheit AE übermittelt.

Beim erfindungsgemäßen System ist auch eine Anwendung AW vorgesehen, welche auf einer nutzerspezifischen Ausgabeeinheit AE installierbar ist bzw. bei einer Durchführung des erfindungsgemäßen Verfahrens auf der nutzerspezifischen Ausgabeeinheit AE installiert wird. Die Anwendung AW kann beispielsweise auf Empfehlung eines Betreibers des Beförderungsmittels BF (z.B. Airline, etc.) vom Nutzer bzw. Passagier vor einer Nutzung des Beförderungsmittels BF auf seine Ausgabeeinheit AE (z.B. Tablet-PC, Smartphone, Laptop, etc.) geladen und dort installiert werden.

Weiterhin umfasst das erfindungsgemäße System zumindest je ein Kommunikationsnetz K1, K2 für jeweils eine Kommunikation außerhalb und innerhalb des Beförderungsmittels BF. Als Kommunikationsnetz K1 außerhalb des Beförderungsmittels BF kann beispielsweise das Internet oder ein Funknetz (z.B. WirelessLAN, UMTS, etc.) eingesetzt werden, über welches z.B. zwischen der Ausgabeeinheit AE und/oder der Anwendung AW und den Systemkomponenten wie z.B. Katalogserver MCS, Schlüsselserver EKS, Verschlüsselungsserver MES eine Kommunikation aufgebaut wird. Eine Kommunikation zwischen dem On-Board-Server OB und z.B. dem Schlüsselserver EKS wird ebenfalls über das Kommunikationsnetz K1 außerhalb des Beförderungsmittels BF durchgeführt. Dabei können beispielsweise Schlüssel Sg1, Sg3 zum On-Board-Server OB vor Betrieb des Beförderungsmittels übertragen werden.

Für eine Kommunikation innerhalb des Beförderungsmittels BF - beispielsweise zwischen dem On-Board-Server OB und den im Beförderungsmittel BF befindlichen Ausgabeeinheiten AE - wird ein Kommunikationsnetz K2 innerhalb des Beförderungsmittels BF eingesetzt. Als Kommunikationsnetz K2 innerhalb des Beförderungsmittels BF ist beispielsweise ein Funknetz wie z.B. WirelessLAN, GSM, UMTS oder Next Generation Mobile Networks (kurz NGMN) einsetzbar.

Ein Start des erfindungsgemäßen Verfahrens, welches mittels des erfindungsgemäßen, in Figur 1 schematisch und beispielhaft dargestellten Systems durchgeführt wird, erfolgt in einem ersten Verfahrensschritt 1, bei welchem über ein erstes Schlüsselpaar Sg1, Sp1, welches aus einem ersten geheimen Schlüssel Sg1 und einem ersten öffentlichen Schlüssel Sp1 besteht, der On-Board-Server OB einem Beförderungsmittel BF (z.B. Flugzeug, etc.) des Betreibers der Beförderungsmittel BF (z.B. Airline, etc.) zugeordnet wird. Der On-Board-Server OB wird sich üblicherweise im Beförderungsmittel BF befinden - entweder als eigenes mobiles Gerät oder als Software-Modul, welches auf einer im Beförderungsmittel BF befindlichen Infrastruktur installiert wird. Wie oben beschrieben, gibt es auch die Möglichkeit, dass der On-Board-Server OB außerhalb des Beförderungsmittels BF installiert bzw. angebracht ist. Eine Information, welcher On-Board-Server OB zu welchem Beförderungsmittel BF (z.B. Flugzeug, etc.) korrespondiert, kann beispielsweise in der Inventardatenbank IDB hinterlegt sein. Eine Zuordnung von Beförderungsmitteln BF zu bestimmten Reisestrecken (z.B. Flügen, Bahnrouten, etc.) kann z.B. in einem System des Betreibers des Beförderungsmittels BF hinterlegt sein. Im ersten Verfahrensschritt 1 wird daher ein erstes Schlüsselpaar Sg1, Sp1 für jeden On-Board-Server OB des Betreibers generiert. Dabei wird der jeweilige erste geheime Schlüssel Sg1 an den jeweiligen On-Board-Server OB gesendet und der jeweilige öffentliche Schlüssel Sp1 vom Schlüsselserver EKS in der Schlüsseldatenbank KDB gespeichert. Damit ist im System des Betreibers des Beförderungsmittels bekannt, welcher On-Board-Server OB zum welchem Beförderungsmittel BF und zu welcher Reisestrecke (z.B. Flug, etc.) gehört.

In einem zweiten Verfahrensschritt 2 wird z.B. vom jeweiligen Passagier/Nutzer des Beförderungsmittel BF auf Empfehlung des Betreibers vor Benutzung des Beförderungsmittels eine Anwendung AW auf der nutzerspezifischen Ausgabeeinheit AE des Passagiers installiert. In einem dritten Verfahrensschritt 3 wird von der Anwendung AW dann ein zweites Schlüsselpaar Sg2, Sp2 vom Schlüsselserver EKS angefordert. Das zweite Schlüsselpaar Sg2, Sp2 besteht ebenfalls aus einem zweiten geheimen Schlüssel Sg2 und einem zweiten öffentlichen Schlüssel Sp2. Der zweite geheime Schlüssel Sg2 wird dabei im dritten Verfahrensschritt 3 über das Kommunikationsnetz K1 an die Ausgabeeinheit AE bzw. an die dort installierte Anwendung AW übertragen und abgelegt. Der zweite öffentliche Schlüssel Sp2 wird vom Schlüsselserver EKS ebenfalls in der Schlüsseldatenbank KDB gespeichert. Das zweite Schlüsselpaar ist damit eindeutig dem Passagier bzw. dessen Ausgabeeinheit AE zugeordnet, wobei die Identität des Passagiers dem Betreiber des Beförderungsmittels BF bekannt ist.

Vom Betreiber des Beförderungsmittels BF kann nun dem Passagier bzw. dem Nutzer des Beförderungsmittels BF ein Informationsdatensatz übermittelt werden, von welchem die Nutzung des Beförderungsmittels durch den Passagier (z.B. Flug, Bahnfahrt, etc.) eindeutig beschrieben wird. Dies kann beispielsweise per elektronischer Mail (gegebenenfalls verschlüsselt und/oder signiert), als SMS oder z.B. bei einem Flug über den Boarding-Pass erfolgen. Eine Entgegennahme des Informationsdatensatzes kann beispielsweise automatisch durch die Anwendung AW erfolgen oder von der Anwendung AW kann über den Informationsdatensatz z.B. bei ihrem Start überprüft werden, ob für den Passagier bzw. Nutzer der Ausgabeeinheit AE eine Nutzung eines Beförderungsmittels BF beim Betreiber gebucht ist.

In einem vierten Verfahrensschritt 4 werden dann von der Anwendung AW verfügbare Informationsinhalte IN angezeigt. Ein Angebot an verfügbaren Informationsinhalten IN, welche in der Informationsdatenbank MDB abgelegt sind, wird der Anwendung AW vom Katalogserver MCS über das Kommunikationsnetz K1 (z.B. Internet, etc.) zur Verfügung gestellt. Über die Anwendung AW können dann ein oder mehrere Informationsinhalte IN ausgewählt werden, welche auf einer bevorstehenden Nutzung des Beförderungsmittels BF vom Passagier konsumiert werden wollen. Für jeden ausgewählten Informationsinhalt IN wird vom Katalogserver MCS eine eindeutige Kennung erstellt und vergeben. Dieser eindeutigen Kennung ist dabei im vierten Verfahrensschritt 4 der Passagier bzw. seine Ausgabeeinheit AE, die jeweilige Nutzung des Beförderungsmittels BF (z.B. Flug, etc.) und der ausgewählte Informationsinhalt IN zugeordnet. Im vierten Verfahrensschritt 4 sollte zweckmäßigerweise die Erfassung von Abrechnungsdaten (z.B. Bankverbindung, Kreditkärtendaten, etc.) erfolgen. Optional kann bereits im vierten Verfahrensschritt 4 auch die Bezahlung für die ausgewählten Informationsinhalte IN erfolgen, sofern der Betreiber den Dienst kostenpflichtig anbieten möchte.

In einem fünften Verfahrensschritt 5 wird von der Anwendung AW dann unter Angabe der eindeutigen Kennung vom Verschlüsselungsserver MES den jeweiligen ausgewählten Informationsinhalt IN angefordert. Dabei wird der eindeutigen Kennung des jeweils ausgewählten Informationsinhalt IN ein drittes vom Schlüsselserver EKS generiertes Schlüsselpaar Sg3, Sp3 zugeordnet. Das dritte Schlüsselpaar Sg3, Sp3 besteht ebenfalls aus einem dritten geheimen Schlüssel Sg3 und einem dritten öffentlichen Schlüssel Sp3. Der dritte öffentliche Schlüssel Sp3 wird für eine Verschlüsselung des ausgewählten Informationsinhalt IN dem Verschlüsselungsserver MES zur Verfügung gestellt.

Der dritte geheime Schlüssel Sg3 wird in einem sechsten Verfahrensschritt 6 vom Schlüsselserver EKS zunächst mit dem zweiten öffentlichen Schlüssel Sp2 und dann mit dem ersten öffentlichen Schlüssel Sp1 aus der Schlüsseldatenbank KDB verschlüsselt. Dann wird der zweifach verschlüsselte dritte geheime Schlüssel Sg3 dem On-Board-Server OB jenes Beförderungsmittels BF zugeordnet, welches vom Passagier bzw. Nutzer der Ausgabeeinheit AE genutzt werden wird. Eine klare Speicherung des dritten geheimen Schlüssels Sg3 sollte aus Sicherheitsgründen unterlassen werden. Als Ergebnis des sechsten Verfahrensschritts 6 steht dann eine Zuordnung von eindeutiger Kennung eines ausgewählten Informationsinhalts IN, von On-Board-Servers OB, von Passagier bzw. der Ausgabeeinheit AE des Passagiers, von ausgewählten Informationsinhalt sowie von erstem, zweiten und drittem Schlüsselpaar Sg1, Sp1, Sg2, Sp2, Sg3, Sp3 zur Verfügung. Dieses Ergebnis bzw. diese Zuordnung kann in der Inventardatenbank IDB gespeichert werden. Der dritte geheime Schlüssel Sg3 wird dann kurz vor Betrieb des Beförderungsmittels BF (z.B. vor Abflug, vor Abfahrt, über Nacht, etc.) mit weiteren zweifach verschlüsselten Schlüsseln Sg3 zum Entschlüsseln von Informationsinhalten IN auf den On-Board-Server OB des Beförderungsmittels BF übertragen, damit diese Schlüssel Sg3 während der Nutzung des Beförderungsmittels BF zur Verfügung stehen.

In einem siebenten Verfahrensschritt 7 werden dann der ausgewählten Informationsinhalt IN vom Verschlüsselungsserver MES aus der Informationsdatenbank MDB angefordert und mit dem dritten öffentlichen Schlüssel Sp3 verschlüsselt. Dann wird der verschlüsselte Informationsinhalt über das Kommunikationsnetz K1 außerhalb des Beförderungsmittels BF auf die Ausgabeeinheit AE übertragen. Eine Übertragung kann dabei z.B. ohne Interaktion des Nutzers bzw. Passagiers im Hintergrund erfolgen. Je nach Zeitpunkt einer Auswahl des Informationsinhalts kann die Übertragung der ausgewählten Informationsinhalte beispielsweise mit geringer Bandbreite und entsprechend längerer Ladezeit durchgeführt werden oder auf Zeiten begrenzt werden, in welchen die Ausgabeeinheit AE ungenutzt ist oder in welchen eine kostenlose oder kostengünstige Datenübertragung möglich ist. Es ist auch möglich, dass ausgewählte Informationsinhalte IN beim Verschlüsselungsvorgang individuell - beispielsweise mit digitalen Wasserzeichen (z.B. Bild-, Ton- und/oder Videosignal) markiert werden, um einen Missbrauch besser zu erkennen.

Bei der Nutzung des Beförderungsmittels BF wird die Ausgabeeinheit AE, auf welcher die Anwendung AW installiert und der ausgewählte, verschlüsselte Informationsinhalt IN gespeichert ist, vom Passagier an Bord des Beförderungsmittels BF gebracht. An Bord des Beförderungsmittels BF wird von der Ausgabeeinheit AE in einem achten Verfahrensschritt 8 über das Kommunikationsnetz K2 innerhalb des Beförderungsmittels BF eine Verbindung zum On-Board-Server OB hergestellt. Diese Verbindung kann beispielsweise über WirelessLAN mit bekanntem Service Set Identifier (SSID) und einem vorab ausgetauschten Netzschlüssel erfolgen, wobei der Netzschlüssel in der Anwendung AW hinterlegt sein kann.

Von der Anwendung AW werden nun die vorab ausgewählten und auf der Ausgabeeinheit verschlüsselt abgelegten Informationsinhalte IN angeboten. Wird ein Informationsinhalt IN zum Abspielen ausgewählt, so wird in einem neunten Verfahrensschritt 9 vom On-Board-Server OB der zum Entschlüsseln des gewählten Informationsinhalts IN notwendige dritte geheime Schlüssel Sg3 angefordert. Der zweifach verschlüsselte dritte geheime Schlüssel Sg3 wird vom On-Board-Server OB mit dem ersten geheimen Schlüssel Sg1, welcher am On-Board-Server OB gespeichert ist, entschlüsselt und dann einfach verschlüsselt mit dem zweiten öffentlichen Schlüssel Sp2 in einem zehnten Verfahrensschritt 10 an die Anwendung AW auf der Ausgabeeinheit AE übertragen. In einem elften Verfahrensschritt 11 wird dann der dritte geheime Schlüssel Sg3 mit dem zweiten geheimen Schlüssel Sg2, welcher auf der Ausgabeeinheit AE bzw. für die Anwendung AW verfügbar ist, entschlüsselt. Dann kann der gewählte Informationsinhalt IN auf der Ausgabeeinheit AE mit dem dritten geheimen Schlüssel Sg3 entschlüsselt und angezeigt werden. Im elften Verfahrensschritt 11 kann, sofern der Betreiber die Informationsinhalte IN bzw. deren Angebot kostenpflichtig anbieten möchte, die Auslieferung des Schlüssels Sg3 aufgezeichnet werden, um bei nächstmöglicher Verbindung zum Kommunikationsnetz K1 einen Bezahlvorgang für die Nutzung der Informationsinhalte IN durchzuführen.

Aus Sicherheitsgründen ist es zweckmäßig, wenn die ausgewählten und auf der Ausgabeeinheit AE hinterlegten Informationsinhalte IN von der Anwendung AW - unabhängig davon, ob diese konsumiert wurden oder nicht - nach der Nutzung des Beförderungsmittels BF (z.B. nach Ende eines Flugs, etc.) gelöscht werden. Ebenso sollten vom On-Board-Server OB bzw. vom Schlüsselserver EKS alle geheimen Schlüssel Sg1, Sg2, Sg3 gelöscht werden. Damit ist ein Zugriff auf die verschlüsselten Informationsinhalte nach Beendigung der Beförderungsmittelnutzung nicht mehr möglich. Es ist auch möglich, dass beispielsweise die geheimen Schlüssel Sg1, Sg3 bereits nach bestätigter Übertragung an den On-Board-Server OB vom Schlüsselserver EKS gelöscht werden. Gegebenenfalls kann das Löschen der Informationsinhalte als auch der geheimen Schlüssel Sg1, Sg2, Sg3 mit einer Zeitverzögerung durchgeführt werden, um z.B. Verspätungen des Beförderungsmittels BF einzukalkulieren.

Alternativ besteht die Möglichkeit, dass das dritte Schlüsselpaar Sg3, Sp3 nicht bei Anforderung eines ausgewählten Informationsinhalt IN generiert wird und dann im sechsten Verfahrensschritt 6 dem On-Board-Server zugeordnet wird, sondern dass vorab eine Anzahl an dritten Schlüsselpaaren Sg3, Sp3 als Vorratsmenge generiert wird und diese Vorratsmenge vorab dem On-Board-Server OB zugeordnet und gegebenenfalls auch übertragen werden. Wird nun im fünften Verfahrensschritt 5 ein ausgewählter Informationsinhalt IN mittels eindeutiger Kennung vom der Anwendung AW angefordert, so wird ein drittes Schlüsselpaar Sg3, Sp3 der Vorratsmenge entnommen und der eindeutigen Kennung zugeordnet. Dies hat den Vorteil, dass z.B. von einem Passagier erst kurz vor Beginn der Nutzung des Beförderungsmittels BF (z.B. kurz vor Abflug im Wartbereich am Flughafen oder in einer Lounge, etc.) und damit gegebenenfalls nach einer Übertragung der dritten Schlüssel Sg3 an den On-Board-Server OB eine Auswahl von Informationsinhalten IN getroffen werden kann. Der dritte geheime Schlüssel Sg3 für den gewählten Informationsinhalt IN wird dann im sechsten Verfahrensschritt 6 einfach verschlüsselt mit dem ersten öffentlichen Schlüssel Sp1 an den On-Board-Server übertragen.

Bei der Nutzung des Beförderungsmittels BF wird dann dieser dritte geheime Schlüssel Sg3 im neunten Verfahrensschritt mit dem ersten geheimen Schlüssel Sg1 vom On-Board-Server entschlüsselt. Eine Übertragung des dritten geheimen Schlüssels Sg3 an die Anwendung AW kann dann beispielsweise unverschlüsselt mittels eines gesicherten Verfahrens erfolgen. So kann beispielsweise Secure Socket Layer (SSL) für eine Übertragung eingesetzt werden. Es kann aber auch der zweite öffentliche Schlüssel Sp2 dazu genutzt werden, welcher beispielsweise ungesichert an den On-Board-Server OB gesendet wird. Der dritte geheime Schlüssel Sg3 kann dann z.B. mit diesem Schlüssel Sp2 verschlüsselt werden und so an die Ausgabeeinheit AE bzw. die Anwendung AW übertragen werden, welche über den zughörigen zweiten geheimen Schlüssel Sg2 verfügt.

Es besteht auch die Möglichkeit ausgewählte Informationsinhalte IN im sechsten Verfahrensschritt 6 in mehreren Abschnitten mit verschiedenen dritten Schlüsselpaaren Sg3, Sp3 zu verschlüsseln. Dazu werden im fünften Verfahrensschritt 5 der eindeutigen Kennung des ausgewählten Informationsinhalt IN beispielsweise mehrere dritte Schlüsselpaare Sg3, Sp3 zugeordnet, welche dann für die Verschlüsselung der jeweiligen Abschnitte herangezogen werden. Auf diese Weise wird verhindert, dass ein Konsum des Informationsinhalts IN nach Beendigung der Nutzung des Beförderungsmittels BF über eine Länge eines Abschnitts fortgesetzt werden kann, und es besteht zu keinem Zeitpunkt die Möglichkeit, den Informationsinhalt IN komplett zu entschlüsseln.

Weiterhin kann bei erfinderischen Verfahren auch angedacht werden, dass z.B. vom Betreiber des Beförderungsmittels BF vor der Benutzung des Beförderungsmittels BF eine automatische Auswahl von Informationsinhalten IN erfolgt und diese auf die Ausgabeeinheit AE geladen werden. Dies können z.B. besonders beliebte oder häufig ausgewählte Informationsinhalte IN sein oder Informationsinhalte IN, welche eine Ähnlichkeit mit vom Passagier bereits früher gewählten Informationsinhalten IN aufweisen.

Durch das erfindungsgemäße Verfahren und das System zur Durchführung des Verfahrens wird durch eine Trennung von der Übermittlung der verschlüsselten Informationsinhalte IN und der Übermittlung der Schlüssel Sg1, Sg2, Sg3, Sp1, Sp2, Sp3 eine Möglichkeit geboten, für die Verschlüsselung starke und damit rechenzeitintensive Verschlüsselungsalgorithmen einzusetzen, welche auf On-Board-Streaming-Systemen aufgrund von Speicher- und Rechenkapazitäten nicht verwendbar sind. Die Verschlüsselung der Informationsinhalte IN wird individuell pro Nutzer bzw. Passagier durchgeführt, wobei der Nutzer bekannt ist und damit gegebenenfalls ein Diebstahl von Informationsinhalten nachweisbar wäre. Da der On-Board-Server OB nur die Schlüssel Sg3 zu Entschlüsseln der Informationsinhalte In zur Verfügung stellt, kann dieser sehr einfach und kostengünstig gestaltet sein. Auch der logistische Aufwand zum Laden bzw. Aktualisierung von Informationsinhalten IN ist relativ gering. Die Informationsinhalte IN werden in der Informationsdatenbank IDB aktualisiert und auf den On-Board-Server OB werden vor jeder Nutzung des Beförderungsmittels BF oder zumindest täglich die neuen Schlüssel Sg3 zum Entschlüsseln der von Passagieren gewählten Informationsinhalte IN geladen. Damit kann den Passagieren individuell ein großen und aktuelles Angebot an Informationsinhalten IN zur Verfügung gestellt werden, welche zusätzlich mit sehr hoher Sicherheit gegen Diebstahl geschützt ist.

## Patentansprüche

1. Verfahren zur Zuordnung von Informationsinhalten (IN), welche bei einer Nutzung eines Beförderungsmittels (BF), insbesondere Flugzeugs, auf einer nutzerspezifischen Ausgabeeinheit (AE) angezeigt und konsumiert werden, **dadurch gekennzeichnet, dass**
- jedem Beförderungsmittel (BF) über ein erstes Schlüsselpaar, welches aus einem ersten geheimen und einem ersten öffentlichen Schlüssel (Sg1, Sp1) besteht, ein On-Board-Server (OB) zugeordnet wird und der erste geheime Schlüssel (Sg1) auf dem On-Board-Server (OB) gespeichert wird (1),
- dass vor einer Nutzung des Beförderungsmittels (BF) eine Anwendung (AW) auf der nutzerspezifischen Ausgabeeinheit (AE) installiert wird (2),
- dass dann von der Anwendung (AW) ein zweites Schlüsselpaar mit einem zweiten geheimen und einem zweiten öffentlichen Schlüssel (Sg2, Sp2) angefordert und der zweite geheime Schlüssel (Sg2) an die Anwendung (AW) übertragen wird (3),
- dass von der Anwendung (AW) verfügbare Informationsinhalten (IN) angezeigt und dann für jeden ausgewählten Informationsinhalt (IN) eine eindeutige Kennung erstellt wird (4),
- dass von der Anwendung (AW) mittels der eindeutigen Kennung die ausgewählten Informationsinhalte (IN) angefordert werden und dabei der eindeutigen Kennung ein drittes Schlüsselpaar mit einem dritten geheimen Schlüssel und einem dritten öffentlichen Schlüssel (Sg3, Sp3) zugeordnet wird (5),
- dass dann der dritte geheime Schlüssel (Sg3) mit dem ersten öffentlichen und dem zweiten öffentlichen Schlüssel (Sp1, Sp2) verschlüsselt und dem On-Board-Server (OB) des Beförderungsmittel,zugeordnet wird (6),
- und dass dann die ausgewählten Informationsinhalte (IN) mit dem dritten öffentlichen Schlüssel (Sp3) verschlüsselt an die Ausgabeeinheit (AE) übertragen werden (7).

2. Verfahren nach Anspruch 1, **dadurch gekennzeichnet**, da ss bei der Nutzung des Beförderungsmittels (BF) von der Ausgabeeinheit (AE) eine Verbindung zum On-Board-Server (OB) hergestellt wird (8), dass vor einem Abspielen des ausgewählten Informationsinhalt (IN) vom On-Board-Server (OB) der dritte geheime Schlüssel (Sg3) mit dem ersten geheimen Schlüssel (Sg1) entschlüsselt (9) und dann an die Anwendung (AW) auf der Ausgabeeinheit (AE) übertragen wird (10), dass dann auf der Ausgabeeinheit (AE) der dritte geheime Schlüssel (Sg3) mit dem zweiten geheimen Schlüssel (Sg2) entschlüsselt wird, und dass dann der ausgewählte Informationsinhalt (IN) von der Anwendung (AW) mit dem dritten geheimen Schlüssel (Sg3) entschlüsselt und angezeigt wird (11).

3. Verfahren nach einem der Ansprüche 1 bis 2, **dadurch gekennzeichnet, dass** eine Zuordnung zwischen dem On-Board-Server (OB), nutzerspezifischer Ausgabeeinheit (AE), ausgewählten Informationsinhalten (IN) und/oder dem ersten, zweiten und dritten Schlüsselpaar (Sg1, Sp1, Sg2, Sp2, Sg3, Sp3) in einer Inventardatenbank (IDB) gespeichert werden (6).

4. Verfahren nach einem der Ansprüche 1 bis 3, **dadurch gekennzeichnet, dass** nach Installation der Anwendung (AW) und einem Übertragen des zweiten geheimen Schlüssels (Sg2) an die Anwendung (AW) ein Informationsdatensatz über eine Nutzung des Beförderungsmittels (BF) übermittelt wird (3).

5. Verfahren nach einem der Ansprüche 1 bis 4, **dadurch gekennzeichnet, dass** die Schlüsselpaare (Sg1, Sp1, Sg2, Sp2, Sg3, Sp3) von einem Schlüsselserver (EKS) erzeugt werden.

6. Verfahren nach einem der Ansprüche 1 bis 5, **dadurch gekennzeichnet, dass** der erste und der zweite öffentliche Schlüssel (Sp1, Sp2) des ersten und zweiten Schlüsselpaars in einer Schlüsseldatenbank (KDB) hinterlegt werden (1, 3).

7. Verfahren nach einem der Ansprüche 1 bis 6, **dadurch gekennzeichnet, dass** nach einem Verlassen des Beförderungsmittels (BF) die geheimen Schlüssel (Sg1, Sg2, Sg3) sowie alle ausgewählten Informationsinhalte (IN) von der Ausgabeeinheit (AW) gelöscht werden.

8. Verfahren nach einem der Ansprüche 1 bis 7, **dadurch gekennzeichnet, dass** die eindeutige Kennung für jeden ausgewählten Informationsinhalt (IN) von einem Katalogserver (MCS) vergeben wird (4).

9. Verfahren nach einem der Ansprüche 1 bis 8, **dadurch gekennzeichnet, dass** das dritte Schlüsselpaar (Sg3, Sp3) zum Zeitpunkt einer Auswahl von einem Informationsinhalt (IN) erzeugt wird (5).

10. Verfahren nach einem der Ansprüche 1 bis 8, **dadurch gekennzeichnet, dass** eine Anzahl von dritten Schlüsselpaaren (Sg3, Sp3) vorab generiert wird und diese dritten Schlüsselpaare (Sg3, Sp3) an den On-Board-Server (OB) übertragen werden.

11. Verfahren nach einem der Ansprüche 1 bis 10, **dadurch gekennzeichnet, dass** ausgewählte Informationsinhalte (IN) bei einer Verschlüsselung markiert werden (7).

12. System zur Durchführung des Verfahrens nach den Ansprüchen 1 bis 11, **dadurch gekennzeichnet, dass** vorgesehen sind:
- ein On-Board-Server (OB) zum Aufbau einer Verbindung mit einer nutzerspezifischen Ausgabeeinheit (AE) innerhalb eines Beförderungsmittels (BF),
- eine Anwendung (AW), welche auf einer nutzerspezifischen Ausgabeeinheit (AE) installierbar ist,
- eine Schlüsselserver (EKS) und eine Schlüsseldatenbank (KDB) zum Erzeugen und Speichern von Schlüsselpaaren (Sg1, Sp1, Sg2, Sp2, Sg3, Sp3), welche je aus einem geheimen und einem öffentlichen Schlüssel bestehen,
- ein Katalogserver (MCS) zum Anfordern eines Angebots an verfügbaren Informationsinhalten (IN) und zum Vergeben von eindeutigen Kennungen für ausgewählte Informationsinhalte (IN),
- ein Verschlüsselungsserver (MES) zum Verschlüsseln von ausgewählten Informationsinhalten (IN),
- eine Inventardatenbank (IDB) zum Ablegen von Zuordnungen zwischen dem On-Board-Server (OB), nutzerspezifischer Ausgabeeinheit (AE), ausgewählten Informationsinhalten (IN) und/oder jeweils zugehörigen Schlüsselpaaren (Sg1, Sp1, Sg2, Sp2, Sg3, Sp3),
- einen Informationsdatenbank (IDB) zum Ablegen verfügbarer und auswählbarer Informationsinhalte (IN),
- und zumindest je ein Kommunikationsnetz (K1, K2) für jeweils eine Kommunikation außerhalb und innerhalb des Beförderungsmittels (BF).

13. System nach Anspruch 12, **dadurch gekennzeichnet, dass** Schlüsselserver (EKS), Katalogserver (MCS) und Verschlüsselungsserver (MES) auf einem Server und/oder Schlüsseldatenbank (KDB), Inventardatenbank (IDB) und Informationsdatenbank (MDB) in einer Datenbank zusammengefasst sind.

14. System einem der Ansprüche 11 bis 12, **dadurch gekennzeichnet, dass** der On-Board-Server (OB) als mobile Einheit ausgeführt ist.

15. System einem der Ansprüche 11 bis 12, **dass, dadurch gekennzeichnet, dass** der On-Board-Server (OB) als Software-Modul ausgeführt ist.

## Claims

1. Method for assigning information contents (IN) which, when a means of transportation (BF), especially an aircraft, is used, are displayed and consumed on a user-specific output unit (AE), **characterised in that**
- each means of transportation (BF), via a first key pair, which consists of a first secret key and a first public key (Sg1, Sp1), is assigned an on-board server (OB) and the first secret key (Sg1) is stored (1) on the on-board server (OB),
- before the means of transportation (BF) is used, an application (AW) is installed (2) on the user-specific output unit (AE),
- a second key pair with a second secret key and a second public key (Sg2, Sp2) is then requested by the application (AW) and the second secret key (Sg2) is transmitted (3) to the application (AW),
- available information contents (IN) are displayed by the application (AW) and then a unique identification is created (4) for each selected information content (IN),
- the selected information contents (IN) are requested by the application (AW) by means of the unique identification and in this process the unique identification is assigned (5) a third key pair with a third secret key and a third public key (Sg3, Sp3),
- the third secret key (Sg3) is then encrypted with the first public key and the second public key (Sp1 Sp2) and is assigned (6) to the on-board server (OB) of the means of transportation,
- and the selected information contents (IN) are then transmitted (7) to the output unit (AE) encrypted with the third public key (Sp3).

2. Method according to claim 1, **characterised in that**, when the means of transportation (BF) is used, a connection is established (8) from the output unit (AE) to the on-board server (OB), that, before the on-board server (OB) plays back the selected information content (IN), the third secret key (Sg3) is decrypted (9) with the first secret key (Sg1) and is then transmitted (10) to the application (AW) on the output unit (AE), that then on the output unit (AE) the third secret key (Sg3) is decrypted with the second secret key (Sg2), and that the selected information content (IN) is then decrypted by the application (AW) with the third secret key (Sg3) and displayed (11).

3. Method according to one of claims 1 to 2, **characterised in that** an assignment between the on-board server (OB), user-specific output unit (AE), selected information contents (IN) and/or the first, second and third key pair (Sg1, Sp1 Sg2, Sp2, Sg3, Sp3) is stored (6) in an inventory database (IDB).

4. Method according to one of claims 1 to 3, **characterised in that**, after installation of the application (AW) and a transmission of the second secret key (Sg2) to the application (AW) an information data record about a use of the means of transportation (BF) is transferred (3).

5. Method according to one of claims 1 to 4, **characterised in that** the key pairs (Sg1, Sp1, Sg2, Sp2, Sg3, Sp3) are created by a key server (EKS).

6. Method according to one of claims 1 to 5, **characterised in that** the first and the second public keys (Sp1, Sp2) of the first and second key pairs are stored (1, 3) in a key database (KDB).

7. Method according to one of claims 1 to 6, **characterised in that** after exit from the means of transportation (BF) the secret keys (Sg1, Sg2, Sg3) as well as all selected information contents (IN) are deleted by the output unit (AW).

8. Method according to one of claims 1 to 7, **characterised in that** the unique identification is issued (4) for each selected information content (IN) by a catalogue server (MCS).

9. Method according to one of claims 1 to 8, **characterised in that** the third key pair (Sg3, Sp3) is created (5) at the time that an information content (IN) is selected.

10. Method according to one of claims 1 to 8, **characterised in that** a number of third key pairs (Sg3, Sp3) are generated in advance and these third key pairs (Sg3, Sp3) are transmitted to the on-board server (OB).

11. Method according to one of claims 1 to 10, **characterised in that** selected information contents (IN) are marked (7) during an encryption.

12. System for carrying out the method according to claims 1 to 11, **characterised in that** the following are provided:
- an on-board server (OB) for setting up a connection with a user-specific output unit (AE) within a means of transportation (BF),
- an application (AW), which is able to be installed on a user-specific output unit (AE),
- a key server (EKS) and a key database (KDB) for creation and storage of key pairs (Sg1, Sp1 Sg2, Sp2, Sg3, Sp3), which each consist of a secret key and a public key,
- a catalogue server (MCS) for requesting an offering of available information contents (IN) and for issuing unique identifications for selected information contents (IN),
- an encryption server (MES) for encryption of selected information contents (IN),
- an inventory database (IDB) for storage of assignments between the on-board server (OB), user-specific output unit (AE), selected information contents (IN) and/or respective associated key pairs (Sg1, Sp1 Sg2, Sp2, Sg3, Sp3),
- an information database (IDB) for storage of available and selectable information contents (IN),
- and at least one communication network (K1, K2) in each case for respective communication outside and inside the means of transportation (BF).

13. System according to claim 12, **characterised in that** key server (EKS), catalogue server (MCS) and encryption server (MES) are grouped on one server and/or key database (KDB), inventory database (IDB) and information database (MDB) are grouped in one database.

14. System according to one of claims 11 to 12, **characterised in that** the on-board server (OB) is embodied as a mobile unit.

15. System according to one of claims 11 to 12, **characterised in that** the on-board server (OB) is embodied as a software module.

## Revendications

1. Procédé d'affectation de contenus d'informations (IN) affichés sur une unité de sortie (AE) spécifique à l'utilisateur et consommés lors d'une utilisation d'un moyen de transport (BF), en particulier d'un avion, **caractérisé en ce que** :
- un serveur embarqué (OB) est affecté à chaque moyen de transport (BF) via une première paire de clés composée d'une première clé secrète et d'une première clé publique (Sg1, Sp1) et **en ce que** la première clé secrète (Sg1) est sauvegardée (1) sur le serveur embarqué (OB) ;
- une application (AW) est installée (2) sur l'unité de sortie (AE) spécifique à l'utilisateur avant une utilisation du moyen de transport (BF) ;
- l'application (AW) demande ensuite une deuxième paire de clés comportant une deuxième clé secrète et une deuxième clé publique (Sg2, Sp2) et **en ce que** la deuxième clé publique (Sg2) est transmise (3) à l'application (AW) ;
- l'application (AW) affiche des contenus d'informations (IN) disponibles et crée ensuite un identifiant univoque pour chaque contenu d'informations sélectionné (IN) ;
- l'application (AW) demande les contenus d'informations sélectionnés (IN) au moyen de l'identifiant univoque en affectant (5) à l'identifiant univoque une troisième paire de clés comportant une troisième clé secrète et une troisième clé publique (Sg3, Sp3) ;
- la troisième clé secrète (Sg3) est ensuite cryptée avec la première clé publique et la deuxième clé publique (Sp1, Sp2) et affectée (6) au serveur embarqué (OB) du moyen de transport et
- les contenus d'informations sélectionnés (IN) sont alors cryptés avec la troisième clé publique (Sp3) et transmis (7) à l'unité de sortie (AE).

2. Procédé selon la revendication 1, **caractérisé en ce que**, lors de l'utilisation du moyen de transport (BF), l'unité de sortie (AE) établit (8) une liaison vers le serveur embarqué (OB), **en ce que**, avant un affichage du contenu d'informations sélectionné (IN), le serveur embarqué (OB) décrypte (9) la troisième clé secrète (Sg3) avec la première clé secrète (Sg1) et la transmet ensuite à l'application (AW) sur l'unité de sortie (AE), **en ce que** la troisième clé secrète (Sg3) est ensuite décryptée avec la deuxième clé secrète (Sg2) sur l'unité de sortie (AE) et **en ce que** l'application (AW) décrypte ensuite le contenu d'informations sélectionné (IN) avec la troisième clé secrète (Sg3) et l'affiche (11).

3. Procédé selon l'une des revendications 1 à 2, **caractérisé en ce qu'**une affectation entre serveur embarqué (OB), unité de sortie (AE) spécifique à l'utilisateur, contenus d'informations sélectionnés (IN) et/ou les première, deuxième et troisième paires de clés (Sg1, Sp1 Sg2, Sp2, Sg3, Sp3) est stockée (6) dans une base de données d'inventaire (IDB).

4. Procédé selon l'une des revendications 1 à 3, **caractérisé par** la transmission (3), après l'installation de l'application (AW) et une transmission de la deuxième clé secrète (Sg2) à l'application (AW), d'un jeu de données d'informations sur une utilisation du moyen de transport (BF).

5. Procédé selon l'une des revendications 1 à 4, **caractérisé en ce que** les paires de clés (Sg1, Sp1 Sg2, Sp2, Sg3, Sp3) sont générées par un serveur de clés (EKS).

6. Procédé selon l'une des revendications 1 à 5, **caractérisé en ce que** la première et la deuxième clé publique (Sp1 Sp2) de la première et de la deuxième paire de clés sont déposées (1, 3) dans une base de données de clés (KDB).

7. Procédé selon l'une des revendications 1 à 6, **caractérisé en ce que**, après avoir quitté le moyen de transport (BF), les clés secrètes (Sg1, Sg2, Sg3) ainsi que tous les contenus d'informations sélectionnés (IN) sont effacés de l'unité de sortie (AW).

8. Procédé selon l'une des revendications 1 à 7, **caractérisé en ce que** l'identifiant univoque pour chaque contenu d'informations sélectionné (IN) est attribué (4) par un serveur de catalogues (MCS).

9. Procédé selon l'une des revendications 1 à 8, **caractérisé en ce que** la troisième paire de clés (Sg3, Sp3) est générée (5) au moment d'une sélection d'un contenu d'informations (IN).

10. Procédé selon l'une des revendications 1 à 8, **caractérisé en ce qu'**un nombre de troisièmes paires de clés (Sg3, Sp3) est généré préalablement et **en ce que** ces troisièmes paires de clés (Sg3, Sp3) sont transmises au serveur embarqué (OB).

11. Procédé selon l'une des revendications 1 à 10, **caractérisé en ce que** des contenus d'informations sélectionnés (IN) sont marqués (7) lors d'un cryptage.

12. Système permettant d'exécuter le procédé selon les revendications 1 à 11, **caractérisé en ce que** sont prévues :
- un serveur embarqué (OB) pour établir une liaison avec une unité de sortie (AE) spécifique à l'utilisateur dans un moyen de transport (BF) ;
- une application (AW) qui peut être installée sur une unité de sortie (AE) spécifique à l'utilisateur ;
- un serveur de clés (EKS) et une base de données de clés (KDB) pour générer et sauvegarder des paires de clés (Sg1, Sp1 Sg2, Sp2, Sg3, Sp3) composées chacune d'une clé secrète et d'une clé publique ;
- un serveur de catalogues (MCS) pour demander une offre de contenus d'informations disponibles (IN) et pour attribuer des identifiants univoques pour des contenus d'informations sélectionnés (IN) ;
- un serveur de cryptage (MES) pour crypter des contenus d'informations sélectionnés (IN) ;
- une base de données d'inventaire (IDB) pour déposer des correspondances entre le serveur embarqué (OB), l'unité de sortie (AE) spécifique à l'utilisateur, des contenus d'informations sélectionnés (IN) et/ou des paires de clés respectivement associées (Sg1, Sp1, Sg2, Sp2, Sg3, Sp3) ;
- une base de données d'informations (IDB) pour déposer des contenus d'informations (IN) disponibles et sélectionnables ;
- et au moins respectivement un réseau de communication (K1, K2) pour respectivement une communication en dehors et à l'intérieur du moyen de transport (BF).

13. Système selon la revendication 12, **caractérisé en ce que** le serveur de clés (EKS), le serveur de catalogues (MCS) et le serveur de cryptage (MES) sont regroupés sur un serveur et/ou la base de données de clés (KDB), la base de données d'inventaire (IDB) et la base de données d'informations (MDB), dans une base de données.

14. Système selon l'une des revendications 11 à 12, **caractérisé en ce que** le serveur embarqué (OB) est réalisé en tant qu'unité mobile.

15. Système selon l'une des revendications 11 à 12, **caractérisé en ce que** le serveur embarqué (OB) est réalisé en tant que module logiciel.
